# DEMANDE DE BREVET EUROPEEN

(11) **EP 3 473 532 A1**
(43) Date de publication de la demande: **24.04.2019**
(21) Numéro de dépôt: 18200833.4
(22) Date de dépôt: 16.10.2018
(51) Int. Cl.: B62H 3/00, E04H 6/00

(54) **SYSTÈME DE RANGEMENT ET DE RECHARGE DE TROTINETTES ÉLECTRIQUES ET STATION LE COMPRENANT**

(30) Priorité: 18.10.2017 FR 1759785
(71) Demandeur: Sophie, 72100 Le Mans (FR)
(72) Inventeur: FAIVRE, Bertrand, 72100 Le Mans (FR); SANDU, Cristian, 92190 Meudon (FR); DUGUET, Pierre, 92210 Saint-Cloud (FR)
(74) Mandataire: Cabinet Chaillot

(57) **Abrégé**

L'invention a pour objet un système de rangement et de recharge de trottinettes électriques (1), caractérisé par le fait qu'il comprend au moins un casier (2), chaque casier (2) étant alimenté par une alimentation électrique et comprenant des moyens de blocage de trottinette dans une position de rangement et un connecteur électrique de casier (5) relié à l'alimentation électrique, lesdits moyens de blocage de trottinette étant configurés pour bloquer en position de rangement une trottinette électrique comprenant un connecteur électrique complémentaire du connecteur électrique de casier (5) de manière à maintenir un contact électrique entre le connecteur électrique de casier (5) et le connecteur électrique de la trottinette électrique en position de rangement.

## Description

La présente invention concerne le domaine des trottinettes électriques, et porte en particulier sur un système de rangement et de recharge de trottinettes électriques et sur une station comprenant ledit système.

Une trottinette électrique comprend généralement un connecteur électrique disposé sur son guidon ou sur sa plate-forme allongée sur laquelle reposent les pieds de l'utilisateur, l'utilisateur devant relié un cordon électrique à ce connecteur électrique pour recharger la batterie de la trottinette électrique. De plus, une trottinette électrique est généralement pliable afin de réduire son encombrement lorsqu'elle n'est pas utilisée. Une telle trottinette électrique est, par exemple, divulguée dans les modèles d'utilité chinois CN204383695U et CN205469487U, dans lesquels un connecteur électrique de recharge est disposé sur le guidon de la trottinette électrique. Cependant, le cordon électrique utilisé pour recharger une telle trottinette ne permet pas une recharge automatique de la trottinette lorsque cette dernière est rangée dans un emplacement de rangement spécifique. En effet, l'utilisateur doit réaliser l'opération fastidieuse de brancher le cordon à la trottinette puis à une prise électrique pour recharger la batterie de la trottinette électrique.

La demande de brevet français FR2997679A1 divulgue un dispositif pour le verrouillage et la recharge d'un vélo électrique. Cependant, ce dispositif n'est pas approprié pour une trottinette électrique et ne permet de mettre en sûreté la trottinette électrique lors de sa recharge, afin de la protéger contre le vol, le vandalisme et les intempéries.

La présente invention vise à résoudre les inconvénients de l'état antérieur de la technique, en proposant un système qui permet à la fois le rangement et la recharge de trottinettes électriques, dans lequel une trottinette électrique est automatiquement rechargée lorsqu'elle est rangée dans ledit système.

La présente invention a donc pour objet un système de rangement et de recharge de trottinettes électriques, caractérisé par le fait qu'il comprend au moins un casier, chaque casier étant alimenté par une alimentation électrique et comprenant des moyens de blocage de trottinette dans une position de rangement et un connecteur électrique de casier relié à l'alimentation électrique, lesdits moyens de blocage de trottinette étant configurés pour bloquer en position de rangement une trottinette électrique comprenant un connecteur électrique complémentaire du connecteur électrique de casier de manière à maintenir un contact électrique entre le connecteur électrique de casier et le connecteur électrique de la trottinette électrique en position de rangement.

Ainsi, les moyens de blocage de trottinette de l'au moins un casier permettent de garantir, lorsque la trottinette est rangée dans le casier, que le connecteur électrique de la trottinette est plaqué contre le connecteur électrique de casier, afin d'assurer la recharge automatique de la batterie de la trottinette électrique.

Le connecteur électrique de casier est disposé dans l'au moins un casier de telle sorte qu'il soit en contact avec celui de la trottinette électrique lorsque cette dernière est bloquée par les moyens de blocage de l'au moins un casier.

La trottinette électrique est de préférence pliable afin de réduire l'encombrement de l'au moins un casier, la trottinette électrique étant repliée sur elle-même dans la position de rangement.

Selon une caractéristique particulière de l'invention, les moyens de blocage de trottinette comprennent un moyen de blocage supérieur et un moyen de blocage inférieur.

Ainsi, les moyens de blocage supérieur et inférieur permettent de garantir un blocage optimal de la trottinette électrique dans l'au moins un casier.

Selon une caractéristique particulière de l'invention, l'un du moyen de blocage supérieur et du moyen de blocage inférieur est un moyen de blocage de roue de trottinette, l'autre du moyen de blocage supérieur et du moyen de blocage inférieur étant un moyen de blocage de guidon ou de plate-forme de trottinette.

Ainsi, l'une de la roue avant et de la roue arrière de la trottinette et l'un du guidon et de la plate-forme de la trottinette sont bloqués par les moyens de blocage supérieur et inférieur afin de garantir un blocage optimal de la trottinette.

Dans le cas où la trottinette n'est pas pliable, les associations suivantes sont possibles :
- moyen de blocage inférieur de roue avant et moyen de blocage supérieur de guidon ;
- moyen de blocage inférieur de roue avant et moyen de blocage supérieur de plate-forme ;
- moyen de blocage inférieur de roue arrière et moyen de blocage supérieur de plate-forme ;
- moyen de blocage supérieur de roue avant et moyen de blocage inférieur de guidon ;
- moyen de blocage supérieur de roue avant et moyen de blocage inférieur de plate-forme ; et
- moyen de blocage supérieur de roue arrière et moyen de blocage inférieur de plate-forme.

Dans le cas où la trottinette est pliable, les associations suivantes sont possibles :
- moyen de blocage inférieur de roue avant et moyen de blocage supérieur de guidon ;
- moyen de blocage inférieur de roue avant et moyen de blocage supérieur de plate-forme ;
- moyen de blocage inférieur de roue arrière et moyen de blocage supérieur de guidon ;
- moyen de blocage inférieur de roue arrière et moyen de blocage supérieur de plate-forme ;
- moyen de blocage supérieur de roue avant et moyen de blocage inférieur de guidon ;
- moyen de blocage supérieur de roue avant et moyen de blocage inférieur de plate-forme ;
- moyen de blocage supérieur de roue arrière et moyen de blocage inférieur de guidon ; et
- moyen de blocage supérieur de roue arrière et moyen de blocage inférieur de plate-forme.

Selon une caractéristique particulière de l'invention, le moyen de blocage de roue de trottinette est un logement configuré pour bloquer en position une roue de la trottinette électrique.

Le logement du moyen de blocage de roue est de préférence disposé en partie inférieure de l'au moins un casier.

Selon une caractéristique particulière de l'invention, le moyen de blocage de guidon ou de plate-forme de trottinette comprend une plaque horizontale dans laquelle est formée une fente configurée pour recevoir le guidon ou la plate-forme de la trottinette électrique, et un bras de blocage rotatif monté sur ressort de rappel et configuré pour fermer la fente une fois le guidon inséré ou la plate-forme insérée dans celle-ci afin de bloquer en position le guidon ou la plate-forme dans la fente de la plaque horizontale.

La plaque horizontale et le bras de blocage rotatif du moyen de blocage de guidon ou de plate-forme sont de préférence disposés en partie supérieure de l'au moins un casier.

Selon une caractéristique particulière de l'invention, le connecteur électrique de casier comprend une partie fixe fixée à l'au moins un casier et une partie mobile montée sur ressort sur la partie fixe et en saillie vers l'intérieur de l'au moins un casier, des contacts électriques étant disposés sur la partie mobile.

Ainsi, lors du blocage de la trottinette par les moyens de blocage de l'au moins un casier, le connecteur électrique de la trottinette appuie contre la partie mobile du connecteur électrique de casier, la partie mobile du connecteur électrique de casier se déplace alors vers la partie fixe du connecteur électrique de casier, ce qui permet de garantir le contact électrique entre les deux connecteurs, et ainsi de garantir une recharge automatique de la trottinette électrique lorsque cette dernière est rangée dans l'au moins un casier.

Selon une caractéristique particulière de l'invention, la partie fixe du connecteur électrique de casier est fixée sur la paroi de fond de l'au moins un casier.

Selon un mode de réalisation préféré de l'invention, le connecteur électrique de la trottinette électrique est disposé à l'avant du guidon de la trottinette électrique, le moyen de blocage inférieur est configuré pour bloquer en position la roue avant de la trottinette électrique, et le moyen de blocage supérieur est configuré pour bloquer en position le guidon de la trottinette électrique. Ainsi, lorsque la trottinette électrique est dans la position de rangement, le connecteur électrique du guidon de la trottinette électrique est en contact avec le connecteur électrique de casier fixé à la paroi de fond du casier.

Selon une caractéristique particulière de l'invention, l'au moins un casier comprend une porte apte à être verrouillée.

Ainsi, la porte du casier permet de mettre en sûreté dans le casier la trottinette électrique lors de sa recharge, afin de la protéger contre le vol, le vandalisme et les intempéries.

La présente invention a également pour objet une station comprenant un système tel que décrit ci-dessus, caractérisée par le fait qu'elle comprend en outre des moyens de calcul, des moyens de communication à distance et une interface utilisateur pour interagir avec la station.

Ainsi, la station permet une distribution de trottinettes électriques en libre-service, les trottinettes électriques étant automatiquement rechargées lorsqu'elles ne sont utilisées par un utilisateur et rangées dans un casier de la station.

La station peut en outre comprendre un casier supplémentaire dans lequel sont disposées des batteries et/ou une électronique de gestion de puissance reliées à l'alimentation électrique de la station.

Les moyens de calcul, les moyens de communications à distance et l'interface utilisateur permettent à un utilisateur d'emprunter ou de louer une trottinette électrique par l'intermédiaire d'une borne, la station étant capable de gérer la recharge des trottinettes électriques et de verrouiller/déverrouiller les portes des casiers de la station.

Pour mieux illustrer l'objet de la présente invention, on va en décrire ci-après, à titre illustratif et non limitatif, un mode de réalisation préféré, avec référence aux dessins annexés.

Sur ces dessins :
- la Figure 1 est une vue en perspective d'un système de rangement et de recharge de trottinettes électriques selon la présente invention ;
- la Figure 2 est une vue de dessous du moyen de blocage supérieur du système de la Figure 1 ;
- la Figure 3 est une vue en coupe du connecteur électrique de casier du système de la Figure 1 ;
- la Figure 4 est une vue en perspective d'une trottinette électrique ;
- la Figure 5 est une vue en perspective du système de la Figure 1 lorsque la trottinette électrique de la Figure 4 est rangée dans celui-ci ; et
- la Figure 6 est une vue en perspective d'une station selon la présente invention.

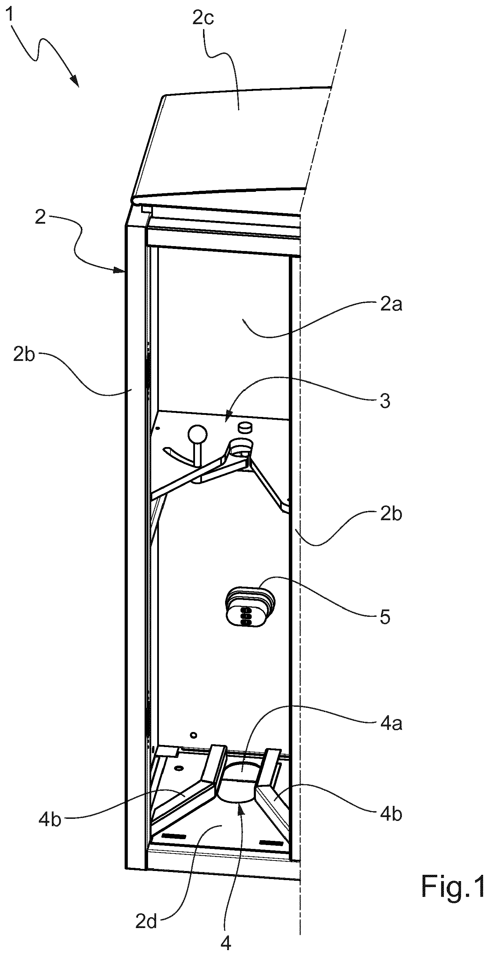

Si l'on se réfère à la Figure 1, on peut voir qu'il y est représenté un système de rangement et de recharge de trottinettes électriques 1 selon la présente invention.

Le système de rangement et de recharge de trottinettes électriques 1 comprend plusieurs casiers 2, chaque casier 2 étant apte à recevoir une trottinette électrique dans une position de rangement, un seul casier 2 ayant été représenté à la Figure 1.

Le casier 2 possède une forme parallélépipédique et comprend une paroi de fond 2a, deux parois latérales 2b, une paroi supérieure 2c et une paroi inférieure 2d.

Le casier 2 comprend en outre à l'intérieur de celui-ci des moyens de blocage de trottinette dans une position de rangement, à savoir un moyen de blocage supérieur 3 et un moyen de blocage inférieur 4.

Le moyen de blocage inférieur 4 est un moyen de blocage de roue de trottinette qui est constitué par un logement 4a configuré pour bloquer en position la roue avant d'une trottinette électrique, ledit logement 4a étant un trou formé dans la paroi inférieure 2d du casier 2.

Il est à noter que le moyen de blocage de roue pourrait également être configuré pour bloquer la roue arrière de la trottinette électrique, sans s'écarter du cadre de la présente invention.

Le moyen de blocage inférieur 4 comprend en outre deux nervures de guidage 4b disposées sur la paroi inférieure 2d du casier 2 de part et d'autre du logement 4a et configurées pour guider la roue avant de la trottinette électrique vers le logement 4a lors du rangement de la trottinette électrique dans le casier 2.

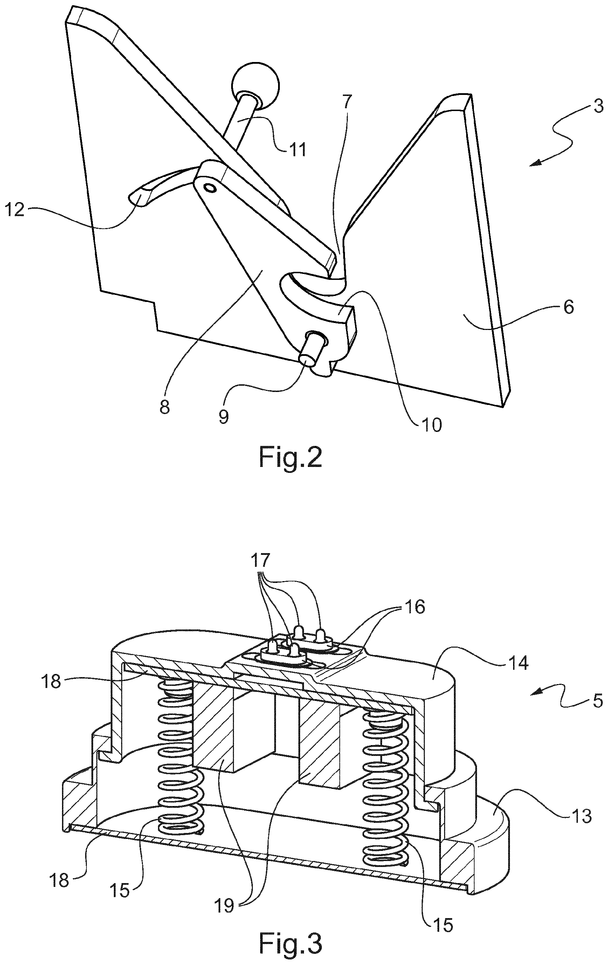

Le moyen de blocage supérieur 3 est un moyen de blocage de guidon de trottinette disposé dans la partie supérieure du casier 2 et qui sera décrit plus en détail à la Figure 2 ci-après.

Le moyen de blocage supérieur 3 pourrait également être un moyen de blocage de plate-forme de trottinette, sans s'écarter du cadre de la présente invention.

Il est à noter que le moyen de blocage supérieur pourrait également être un moyen de blocage de roue avant ou arrière de trottinette et que le moyen de blocage inférieur pourrait également être un moyen de blocage de guidon ou de plate-forme de trottinette, sans s'écarter du cadre de la présente invention.

Le casier 2 comprend en outre un connecteur électrique de casier 5 fixé sur la paroi de fond 2a du casier 2 et relié à une alimentation électrique (non représentée à la Figure 1). Le connecteur électrique de casier 5 sera décrit plus en détail à la Figure 3 ci-après.

Si l'on se réfère à la Figure 2, on peut voir qu'il y est représenté le moyen de blocage supérieur 3 du système 1.

Le moyen de blocage supérieur 3, qui est un moyen de blocage de guidon de trottinette, comprend une plaque horizontale 6 fixée dans la partie supérieure du casier 2 entre ses deux parois latérales 2b.

Une fente 7 est formée dans la plaque 6, ladite fente 7 étant configurée pour recevoir le guidon d'une trottinette électrique dans la position de rangement, ladite fente 7 étant évasée afin de faciliter et de guider l'insertion du guidon dans celle-ci.

Le moyen de blocage supérieur 3 comprend en outre un bras de blocage 8 monté rotatif sous la plaque 6 par l'intermédiaire d'un axe de rotation 9 fixé sous la plaque 6.

Le bras de blocage 8 est configuré pour fermer la fente 7 une fois le guidon inséré dans celle-ci afin de bloquer en position le guidon dans la fente 7 de la plaque 6, le bras de blocage 8 possédant une encoche 10 formée dans celui-ci, ladite encoche 10 étant circulaire et complémentaire de la section transversale de la colonne de direction du guidon.

Une poignée d'actionnement 11 est fixée sur le bras de blocage 8 afin de permettre à un utilisateur de déplacer le bras de blocage 8 de manière à ouvrir la fente 7 afin d'y insérer le guidon de la trottinette.

Un trou allongé 12 est formé dans la plaque 6, la poignée d'actionnement 11 étant insérée dans ledit trou allongé 12, ainsi la course du bras de blocage 8 est définie par la longueur du trou allongé 12 dans la plaque 6.

Le bras de blocage 8 est monté sur ressort de rappel (non représenté à la Figure 2) afin de refermer automatiquement la fente 7 lorsque la poignée d'actionnement 11 n'est pas actionnée par l'utilisateur.

Si l'on se réfère à la Figure 3, on peut voir qu'il y est représenté le connecteur électrique de casier 5 du système 1.

Le connecteur électrique de casier 5 comprend une partie fixe 13 fixée à la paroi de fond 2a du casier 2.

Le connecteur électrique de casier 5 comprend en outre une partie mobile 14 montée sur ressorts 15 sur la partie fixe 13 et en saillie vers l'intérieur du casier 2.

Trois paires de contacts électriques 16 sont disposées sur la partie mobile 14 (seulement deux paires étant représentées à la Figure 3), chaque paire de contacts électriques 16 comprenant deux contacts électriques 17 montés sur ressort.

Les trois paires de contacts électriques 16 incluent une paire de contacts de masse, une paire de contacts de communication et d'alimentation électronique et une paire de contacts de charge de batterie.

Deux cartes électroniques 18 sont disposées dans le connecteur électrique de casier 5, l'une étant disposée dans la partie fixe 13 et l'autre étant disposée dans la partie mobile 14, lesdites deux cartes électroniques 18 étant configurées pour gérer les signaux et/ou la puissance depuis/vers les trois paires de contacts électriques 16.

Deux relais 19 sont en outre disposés dans la partie mobile 14, lesdits relais 19 étant reliés aux paires de contacts électriques 16 et commandés par les cartes électroniques 18.

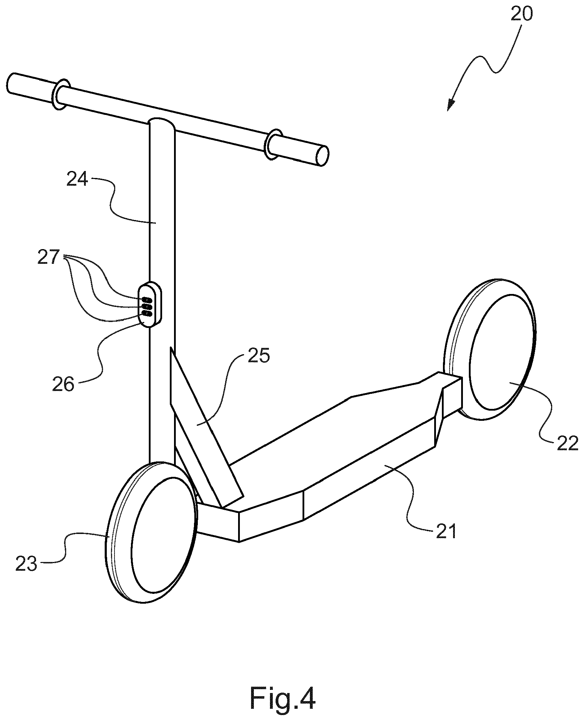

Si l'on se réfère à la Figure 4, on peut voir qu'il y est représenté une trottinette électrique 20 configurée pour être rangée et rechargée dans le casier 2 du système 1.

La trottinette électrique 20 comprend une plate-forme 21 sur laquelle sont fixées une roue arrière 22 et une roue avant 23.

Un guidon 24 est relié à la plate-forme 21 par l'intermédiaire d'un bras 25, ledit bras 25 étant monté pivotant sur la plate-forme 21 de telle sorte que la trottinette électrique 20 est pliable. La trottinette électrique 20 peut ainsi être repliée sur elle-même dans la position de rangement.

La trottinette électrique 20 comprend en outre, disposé à l'avant du guidon 24, un connecteur électrique de trottinette 26 comprenant trois contacts électriques 27, le connecteur électrique de trottinette 26 étant complémentaire du connecteur électrique de casier 5.

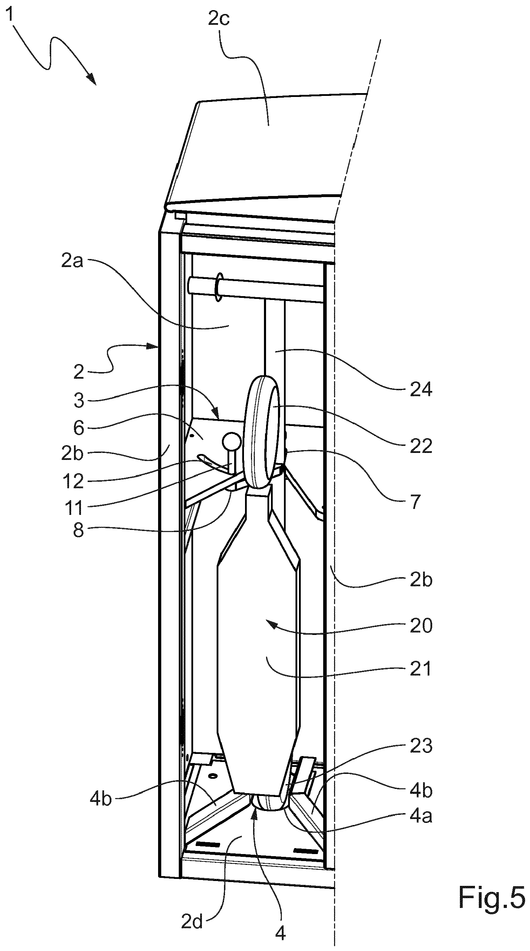

Si l'on se réfère à la Figure 5, on peut voir qu'il y est représenté le système 1 dans le casier 2 duquel est rangée et rechargée la trottinette électrique 20.

La trottinette électrique 20 est repliée sur elle-même avant d'être rangée dans le casier 2.

La roue avant 23 de la trottinette électrique 20 est insérée dans le logement 4a du moyen de blocage inférieur 4.

L'utilisateur actionne ensuite la poignée d'actionnement 11 du moyen de blocage supérieur 3 pour ouvrir la fente 7 du moyen de blocage supérieur 3, insère la colonne de direction du guidon 24 de la trottinette électrique 20 dans la fente 7, puis relâche la poignée d'actionnement 11 afin de bloquer le guidon 24 dans le moyen de blocage supérieur 3.

Le connecteur électrique de casier 5 est positionné sur la paroi de fond 2a du casier 2 de telle sorte qu'il soit en contact avec celui de la trottinette électrique 20 lorsque cette dernière est rangée dans le casier 2.

Les moyens de blocage supérieur 3 et inférieur 4 bloquent ainsi en position de rangement la trottinette électrique 20 de manière à maintenir un contact électrique entre le connecteur électrique de casier 5 et le connecteur électrique 26 de la trottinette électrique 20 en position de rangement.

Lors du blocage de la trottinette électrique 20 par les moyens de blocage supérieur 3 et inférieur 4 du casier 2, le connecteur électrique 26 de la trottinette électrique 20 appuie contre les contacts électriques 17 de la partie mobile 14 du connecteur électrique de casier 5, la partie mobile 14 du connecteur électrique de casier 5 se déplaçant alors vers la partie fixe 13 du connecteur électrique de casier 5, ce qui permet de garantir le contact électrique entre les deux connecteurs 5 et 26, et ainsi de garantir une recharge automatique de la trottinette électrique 20 lorsque cette dernière est rangée dans le casier 2.

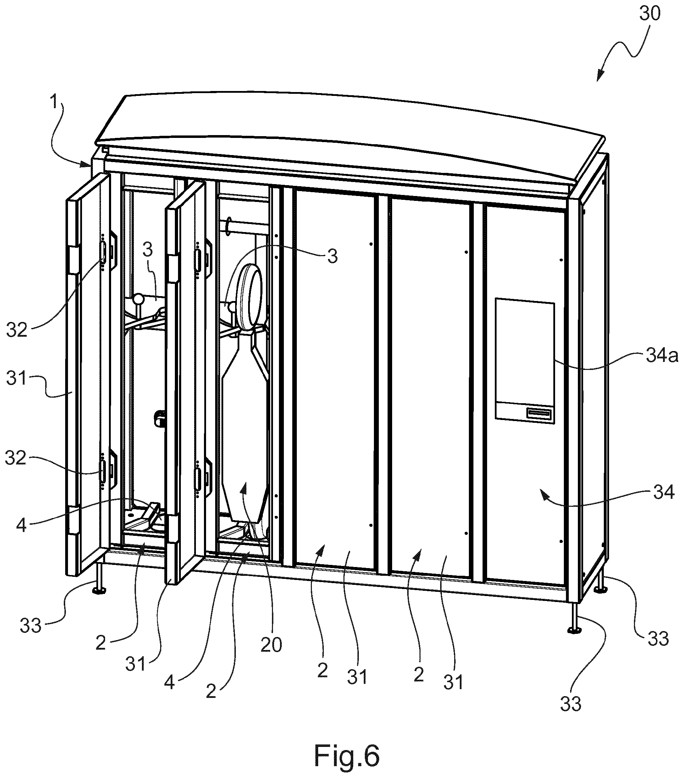

Si l'on se réfère à la Figure 6, on peut voir qu'il y est représenté une station 30 comprenant le système de rangement et de recharge de trottinettes électriques 1.

Le système 1 de la station 30 comprend quatre casiers 2, chaque casier 2 comprenant une porte 31 fixée à celui-ci par l'intermédiaire de charnières 32 et apte à être verrouillée par la station 30.

A la Figure 6, deux des casiers 2 sont représentés avec la porte 31 ouverte, et les deux autres casiers étant représentés avec la porte 31 fermée. Une trottinette électrique 20 est représentée dans la position de rangement dans l'un des casiers 2 ouverts.

La station 30 comprend en outre un compartiment 34 sur lequel est disposée une interface utilisateur 34a, ledit compartiment 34 étant juxtaposé aux casiers 2 du système 1, l'ensemble étant disposé sur quatre pieds de support 33.

L'interface utilisateur 34a permet à un utilisateur d'interagir avec la station 30.

Le compartiment 34 comprend en outre, à l'intérieur de celui-ci, des moyens de calcul, des moyens de communication à distance, une électronique de gestion de puissance reliée à l'alimentation électrique du système 1 et/ou une ou plusieurs batteries reliées à l'alimentation électrique du système 1.

Ainsi, la station 30 permet une distribution de trottinettes électriques 20 en libre-service, les trottinettes électriques 20 étant automatiquement rechargées lorsqu'elles ne sont utilisées par un utilisateur et rangées dans l'un des casiers 2 de la station 30.

Un utilisateur peut ainsi emprunter ou louer une trottinette électrique 20 par l'intermédiaire de l'interface utilisateur 34a, la station 30 étant capable de gérer la recharge des trottinettes électriques 20 disposées dans les casiers 2 et de verrouiller/déverrouiller les portes 31 des casiers 2 de la station 30 afin de permettre à un utilisateur de prendre ou de ranger une trottinette électrique 20.

## Revendications

1. Système de rangement et de recharge de trottinettes électriques (1), **caractérisé par le fait qu'**il comprend au moins un casier (2), chaque casier (2) étant alimenté par une alimentation électrique et comprenant des moyens de blocage de trottinette dans une position de rangement et un connecteur électrique de casier (5) relié à l'alimentation électrique, lesdits moyens de blocage de trottinette étant configurés pour bloquer en position de rangement une trottinette électrique (20) comprenant un connecteur électrique (26) complémentaire du connecteur électrique de casier (5) de manière à maintenir un contact électrique entre le connecteur électrique de casier (5) et le connecteur électrique (26) de la trottinette électrique (20) en position de rangement.

2. Système (1) selon la revendication 1, **caractérisé par le fait que** les moyens de blocage de trottinette comprennent un moyen de blocage supérieur (3) et un moyen de blocage inférieur (4).

3. Système (1) selon la revendication 2, **caractérisé par le fait que** l'un du moyen de blocage supérieur (3) et du moyen de blocage inférieur (4) est un moyen de blocage de roue de trottinette, l'autre du moyen de blocage supérieur et du moyen de blocage inférieur étant un moyen de blocage de guidon ou de plate-forme de trottinette.

4. Système (1) selon la revendication 3, **caractérisé par le fait que** le moyen de blocage de roue de trottinette est un logement (4a) configuré pour bloquer en position une roue (23) de la trottinette électrique (20).

5. Système (1) selon la revendication 3 ou la revendication 4, **caractérisé par le fait que** le moyen de blocage de guidon ou de plate-forme de trottinette comprend une plaque horizontale (6) dans laquelle est formée une fente (7) configurée pour recevoir le guidon (24) ou la plate-forme (21) de la trottinette électrique (20), et un bras de blocage rotatif (8) monté sur ressort de rappel et configuré pour fermer la fente (7) une fois le guidon (24) inséré ou la plate-forme (21) insérée dans celle-ci afin de bloquer en position le guidon (24) ou la plate-forme (21) dans la fente (7) de la plaque horizontale (6).

6. Système (1) selon l'une des revendications 1 à 5, **caractérisé par le fait que** le connecteur électrique de casier (5) comprend une partie fixe (13) fixée à l'au moins un casier (2) et une partie mobile (14) montée sur ressort sur la partie fixe (13) et en saillie vers l'intérieur de l'au moins un casier (2), des contacts électriques (17) étant disposés sur la partie mobile (14).

7. Système (1) selon la revendication 6, **caractérisé par le fait que** la partie fixe (13) du connecteur électrique de casier (5) est fixée sur la paroi de fond (2a) de l'au moins un casier (2).

8. Système (1) selon l'une des revendications 1 à 7, **caractérisé par le fait que** l'au moins un casier (2) comprend une porte (31) apte à être verrouillée.

9. Station (30) comprenant un système (1) selon l'une des revendications 1 à 8, **caractérisée par le fait qu'**elle comprend en outre des moyens de calcul, des moyens de communication à distance et une interface utilisateur pour interagir avec la station (30).
